# FASCICULE DE BREVET EUROPEEN

(11) **EP 1 097 799 B1**
(45) Date de publication et mention de la délivrance du brevet: **31.03.2004**
(21) Numéro de dépôt: 00403089.6
(22) Date de dépôt: 08.11.2000
(51) Int. Cl.: B29C 70/38, B32B 31/00, B65H 81/00

(54) **Tête enrubanneuse pour l'application de bande en matériau composite**
Bandlegeeinheit zum Auftragen eines Bandes aus Verbundmaterial
Tape laying unit for depositing a band of composite material

(30) Priorité: 08.11.1999 ES 9902440
(43) Date de publication de la demande: 09.05.2001
(73) Titulaire: Torres Martinez, Manuel, E-31007 Pamplona (ES)
(72) Inventeur: Torres Martinez, Manuel, E-31007 Pamplona (ES)
(74) Mandataire: Thévenet, Jean-Bruno

(56) Documents cités:
- EP-A- 0 144 927
- EP-A- 0 333 010
- EP-A- 0 644 042
- ES-A- 2 114 413
- FR-A- 2 713 213
- FR-A- 2 756 510
- US-A- 4 591 402
- US-A- 4 696 707

## Description

La présente invention se rapporte à une tête destinée à l'application de bandes laminaires de ce qu'on appelle un composite, avec lesquelles, et par la superposition compacte desquelles on forme des pièces stratifiées, du genre des panneaux, qu'on utilise dans les industries aéronautique, navale etc..

Le brevet USA n DEG 4 696 707 de "The Ingersoll Milling Machine Company", ainsi que le brevet européen 0 333 010 de "Cincinnati Milacron Inc." et les brevets 9302506 et 9402102 appartenant à la demanderesse de la présente invention se rapportent à ce type de tête.

Ces têtes enrubanneuses comprennent des éléments compacteurs qui sont ceux qui appuient sur la bande à appliquer, en exerçant une pression sur cette dernière, pour qu'elle se fixe sur la couche supérieure de la pièce en formation, pour réaliser le compactage en uniformisant dans la plus mesure grande mesure possible l'incorporation de la bande sur la surface du panneau correspondant, afin d'éviter qu'il ne se produise des bulles d'air dans la couche formée, puisque, pour certaines applications comme celles du secteur aéronautique, de telles bulles rendraient inutilisable le panneau qui les contiendrait.

Pour que le compactage soit le plus efficace possible, il est nécessaire que l'élément compacteur s'adapte aux éventuelles courbures et irrégularités que le panneau présente dans sa surface et qu'en supplément, l'élément compacteur pousse sur la bande en cours d'application avec une force adéquate.

A cet effet, il est déjà connu de réaliser les éléments compacteurs avec une structure segmentée, dans laquelle les différents segments sont maintenus dans leur position par des moyens mécaniques, ce qui est d'une construction très compliquée et, par ailleurs, d'un médiocre fiabilité en fonctionnement.

Dans les brevets 9302506 et 9402102, on trouve d'un autre côté une solution pour la construction des éléments compacteurs comportant une réalisation de pièces identiques disposées l'une à côté de l'autre dans une corrélation telle que chaque pièce se déplace en glissant par rapport aux pièces contiguës, en un mouvement indépendant de chacune d'elles, lesdites pièces formant des évidements qui définissent dans leur ensemble des logements dans lesquels se trouvent des conduits tubulaires où circule un fluide sous pression.

Les conduits tubulaires sont communs à toutes les pièces d'un même élément compacteur et possèdent une rigidité suffisante pour maintenir les différentes pièces dans la position stable d'alignement, l'une à côté de l'autre mais, en même temps, ils sont flexibles, de sorte que, si l'on presse extérieurement sur une quelconque des pièces, il se produit un déplacement de cette dernière par déformation élastique des conduits tubulaires, lesquels absorbent ledit déplacement. A la disparition de la poussée extérieure sur la pièce déplacée, le fluide sous pression de l'intérieur des conduits tubulaires lui fait reprendre la position initiale, la pièce revenant alors en alignement avec les autres.

De cette façon, chaque élément compacteur définit un front d'attaque qui s'adapte aux courbures et irrégularités du panneau qu'on forme avec les bandes en cours d'application, en parvenant ainsi à un compactage uniforme de toute la surface. Le brevet US 4,591,402 décrit une tête enrubanneuse selon la première partie de la revendication principale. Dans cette tête enrubanneuse connue, il y a un fouloir 131 et un élément de pression 145 qui ne sont pas indépendants, mais au contraire qui se déplacent au même moment de telle sorte que le fouloir agit lorsque l'élément de pression n'agit pas, et vice versa.

Selon la présente invention, on propose une nouvelle tête enrubanneuse destinée à la fonction déjà indiquée plus haut, dans laquelle on a prévu des caractéristiques de réalisation de la construction qui la rendent avantageuse sous l'aspect fonctionnel.

Cette tête objet de l'invention présente la particularité consistant en ce que les moyens de compactage sont constitués par un élément fouleur et par un élément de pression, lesquels agissent indépendamment et successivement sur chaque zone d'application, les deux éléments pouvant être basculés entre des positions respectives de travail et de retrait, de manière que le fouloir effectue en premier lieu l'application de la bande en s'adaptant à la surface correspondante, en possédant pour cela une construction déformable en fonction de la surface ; tandis que l'élément de pression entre ensuite en action en comprimant la bande appliquée avec force sur la surface d'application. De cette façon, on obtient un parfait compactage des bandes sur la surface d'application. Plus particulièrement, la présente invention prévoit une tête enrubanneuse pour l'application de bandes de composite du type formé d'un ensemble rotatif pouvant être basculé, comprenant des moyens de compactage destinés à presser une bande composée d'une couche supérieure de composite et d'une feuille support en papier et qui est acheminée à partir d'une bobine d'alimentation, les moyens de compactage étant constitués par un fouloir et par un élément de pression, lesquels peuvent tous deux être basculés entre des positions respectives de travail et de retrait, le fouloir entrant en action en premier lieu pour fixer la couche supérieure de composite de la bande sur la surface d'application, tandis que l'élément de pression agit ensuite, en pressant la couche de composite avec force contre la surface correspondante pour effectuer le compactage, caractérisée en ce que : le fouloir et l'élément de pression sont disposés pour pouvoir être actionnés indépendamment et successivement sur la zone d'application, le fouloir étant monté sur un support basculant, lequel peut être actionné en basculement au moyen de cylindres d'actionnement, pour donner les positions de travail et de retrait dudit fouloir, et l'élément de pression étant monté sur un support basculant, lequel peut être actionné en basculement au moyen de cylindres d'actionnement pour donner les positions de travail et de retrait dudit élément de pression tandis que d'autres cylindres entrent en action pour presser ledit élément de pression avec force contre la surface d'application dans la position de travail.

La tête proposée comprend en outre un dispositif de centrage et d'alignement de la bande avec lequel on évite les erreurs auxquelles le désalignement de la bande donne lieu et qui s'accumulent pendant le processus d'application.

Pour cela, le porte-bobines qui porte le chariot d'acheminent de la bande est mobile dans son ensemble dans la direction axiale, en permettant ainsi de régler la situation du chariot pour son centrage par rapport à l'alignement de l'application ; cependant que, sur le trajet de l'acheminement de la bande jusqu'à la zone d'application, sont disposés des guides conducteurs, lesquels sont réglables en largeur pour situation du chariot pour son centrage par rapport à l'alignement de l'application ; cependant que, sur le trajet de l'acheminement de la bande jusqu'à la zone d'application, sont disposés des guides conducteurs, lesquels sont réglables en largeur pour l'adaptation à la bande utilisée et à leur tour, réglables en position pour le centrage par rapport à l'alignement de l'application.

Dans la tête, sont aussi prévus des moyens de coupe avec lesquels on obtient la coupe de la bande de composite de la façon nécessaire pour qu'elle se détache en toute sécurité, en respectant la feuille support en papier afin qu'elle ne se casse pas et qu'elle puisse être recueillie sans interruption.

Lesdits moyens de coupe sont constitués par deux mécanisme de coupe, lesquels comprennent un actionnement rotatif par moteur, un actionnement de déplacement longitudinal par vis et un actionnement de déplacement en hauteur par cylindres, en permettant la réalisation de coupes selon une trajectoire quelconque et avec une profondeur de sectionnement total de la bande de composite, jusqu'à la feuille support en papier sans que celle-ci ne soit affectée d'un risque de rupture.

Les mouvements de rotation et de basculement de la tête utilisés pour le processus d'enrubannage sont commandés avec des mécanismes à double pignon d'attaque sur une couronne réceptrice, au moyen desquels on obtient une précision totale, sans jeu dans l'inversion du mouvement.

Sur le parcours de la bande vers la zone d'application, sont prévues deux boîtes munies de photodiodes détectrices au moyen desquelles s'effectue un parfait contrôle de la bande, pour éviter qu'on ne vienne à appliquer des parties défectueuses.

La vitesse de l'acheminement de la bande vers la zone d'application est contrôlée au moyen d'un rouleau encodeur de transfert au moyen duquel s'effectue une commande de l'actionnement de l'avance de la bande, pour maintenir une vitesse constante d'arrivée à la zone d'application, en restant indépendant des variables liées à l'épuisement de la bobine d'alimentation.

Avec tout cela, on obtient une tête enrubanneuse qui offre des caractéristiques certainement très avantageuses grâce à la précision qu'on obtient dans les différents aspects pour réaliser l'application des bandes de composite avec une totale perfection.

La figure 1 montre une perspective de l'ensemble de la tête enrubanneuse proposée.

La figure 2 est une vue de côté de ladite tête objet de l'invention.

La figure 3 est une vue frontale correspondante de la tête.

La figure 4 montre un détail agrandi de l'ensemble porteur de la bobine d'alimentation de la bande à appliquer et de la bobine réceptrice du papier protecteur formant le reste de la bande appliquée.

La figure 5 montre un détail de l'ensemble de guidage de la bande à appliquer, où l'on observe le guide supérieur et le guide inférieur avec leurs mécanismes de réglage.

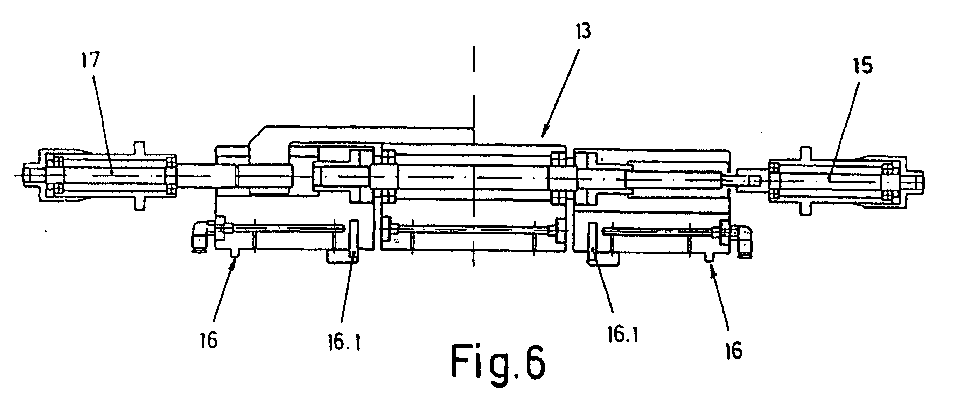

La figure 6 montre un détail agrandi du mécanisme de réglage du guide conducteur supérieur.

La figure 7 est une vue en élévation des mécanisme de coupe.

La figure 8 est une vue en perspective en plan des mécanismes de coupe.précités.

La figure 9 est une coupe transversale prise comme indiqué sur la figure précédente.

La figure 10 est un schéma de l'ensemble des moyens de compactage formés par un fouloir et un élément de pression indépendants.

Les figures 11 à 14 représentent une séquence du processus d'application d'une bande, en montrant les positions successives des moyens de compactage.

la figure 15 est un détail des boîtes de détecteurs prévus pour le contrôle de la bande à appliquer.

La figure 16 est un détail du rouleau encodeur de contrôle de la vitesse d'acheminement de la bande vers la zone d'application.

La présente invention se rapport à une tête enrubanneuse, du type de celles qu'on utilise pour l'application de bandes de composite dans la formation de pièces stratifiées ou de panneaux par superposition et compactage des bandes.

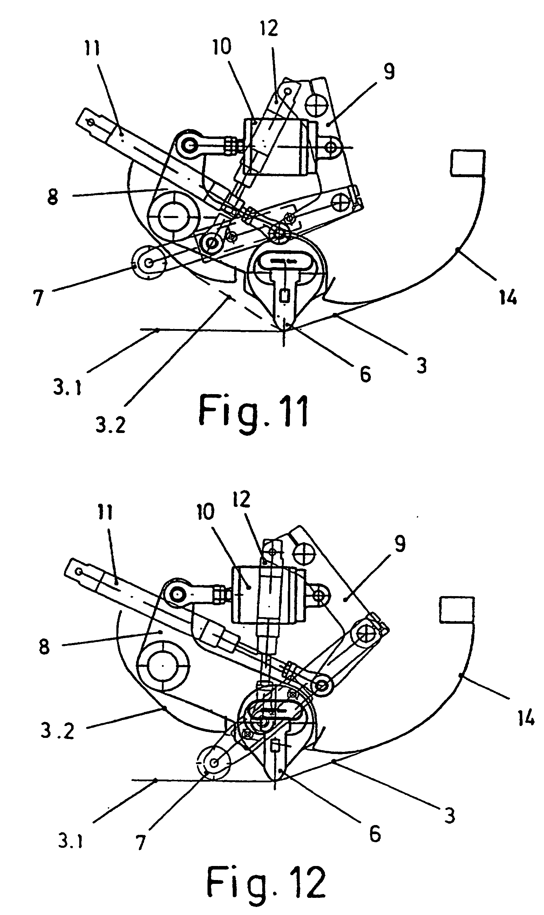

Ces têtes comprennent un porte-bobines (1) dans lequel est montée une bobine (2) qui porte la bande (3) à appliquer, ladite bande (3) étant conduite vers la zone d'application où entrent en action des moyens de pression qui réalisent le compactage de la bande de composite (3.1, figures 11 à 14) sur la surface en formation, tandis que la feuille support en papier (3.2) correspondante est conduite pour s'enrouler sur une bobine réceptrice (4) disposée sur un porte-bobines respectif (5).

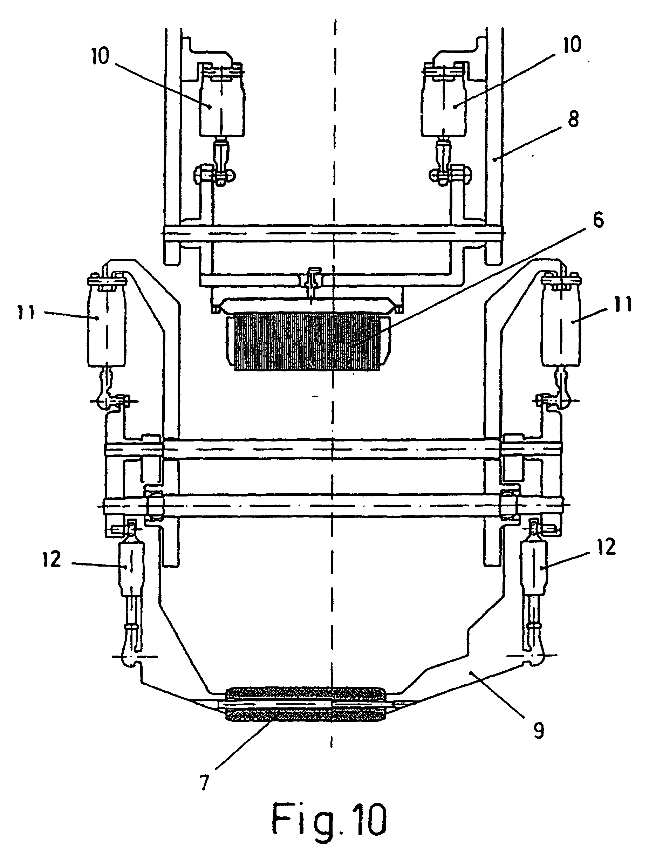

Selon l'invention les moyens prévus pour le compactage comprennent un élément fouleur (6) et un élément de pression (7), lesquels sont disposés de manière indépendante sur de supports respectifs (8 et 9), comme on l'observe sur la figure 10.

Le fouloir (6) est constitué par un élément qui forme un avant actionneur flexible, en permettant une adaptation à la surface d'application du composite (3.1), d'une manière qui permet d'absorber les irrégularités de ladite surface, en pressant uniformément sur toute la ligne de l'application.

Ledit fouloir (6) peut être basculé avec son support (8) au moyen de cylindres (10), avec possibilité de pivoter entre une position de travail sur la zone d'application et une position inopérante en situation rétractée par rapport à ladite zone d'application.

L'élément de pression (7) est constitué de son côté par un rouleau de caoutchouc qui est monté lui aussi de façon à pouvoir être basculé, en pouvant pivoter au moyen de cylindres (11) entre une position de travail sur la zone d'application et une position inopérante en situation rétractée par rapport à ladite zone d'application, tandis qu'au moyen d'autres cylindres (12), on peut produire une forte pression de ce rouleau sur la zone d'application, dans la position de travail.

De cette façon, le processus de compactage de la bande de composite (3.1) sur la surface en formation se produit selon la séquence illustrée par les figures 11 à 14.

Dans une première phase, la bande de composite (3.1) est pressée sur la surface correspondante par le fouloir (6), comme le montre la figure 11, l'élément de pression (7) restant dans la position inopérante.

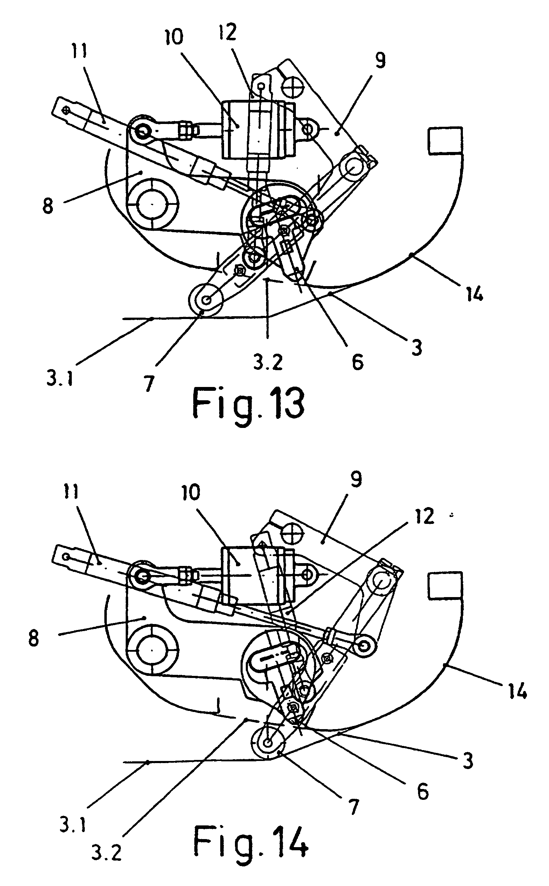

Ensuite, sous l'action des cylindres (11), l'élément de pression (7) se place en position pour entrer en action, comme le montre la figure 12, le fouloir (6) basculant alors dans la positon inopérante, sous l'action des cylindres (10), comme le montre la figure 13.

Et, finalement, l'élément de pression (7) est amené, au moyen des cylindres (12), à exercer une forte pression sur la zone d'application, comme le montre la figure 14, en engendrant ainsi un parfait compactage de la bande de composite (3.1) sur la surface correspondante.

Sous l'effet du retrait des cylindres (12) et des cylindres (11), l'élément de pression (7) bascule ensuite à la position inopérante, tandis qu'avec les cylindres (10), on fait basculer le fouloir (6) dans la position de travail, de sorte qu'on retrouve la position initiale de la figure 11, pour effectuer le compactage d'un nouveau segment de la bande de composite (3.1) dans la suite du processus d'application.

Le processus de compactage précité pourrait aussi être réalisé avec deux éléments (6) et (7) identiques, mais disposés de manière que l'un exerce une pression de pose de la bande de composite (3.1) et que l'autre exerce une pression plus forte afin de rendre le compactage effectif.

Le guidage de la bande (3) depuis la bobine d'alimentation (2) jusqu'à la zone d'application est réalisée en passsant sur des guides (13) et (14), lesquels sont équipés d'une alimentation en air sous pression, qui crée un coussin d'air sur lequel la bande (3) s'appuie dans son glissement, en évitant ainsi les frottements.

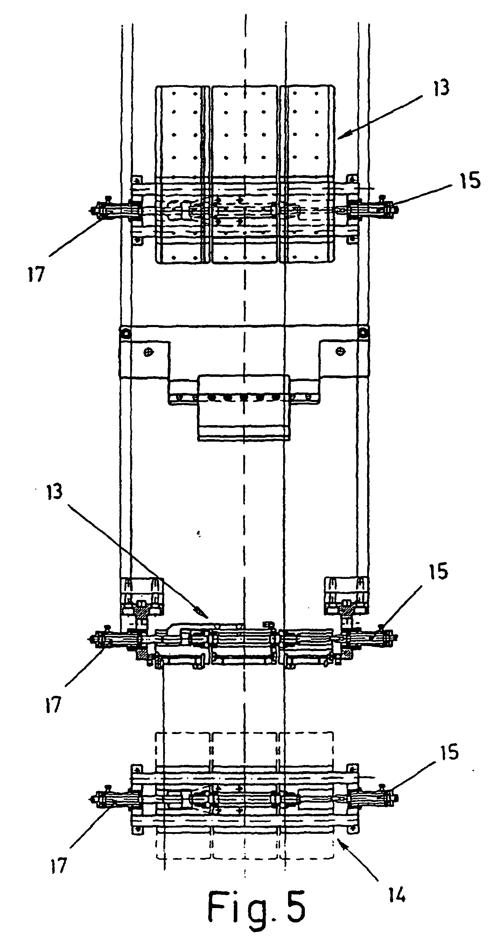

Lesdits guides (13) et (14) sont formés par un ensemble de secteurs qui réalisent une composition réglable en largeur, laquelle permet d'ajuster parfaitement chacun des guides (13) et (14) à la largeur de la bande (3) utilisée dans un cas considéré ; chacun des guides (13) et (14) précités disposant pour cela d'un actionneur (15, figure 5) qui permet de déplacer l'ensemble constitutif respectif, en modifiant la largeur, par rapprochement ou éloignement simultané des parties extrêmes correspondantes par rapport à la ligne centrale.

Ces guides (13) et (14) possèdent en outre, comme on l'observe sur la figure (6) qui concerne le guide (13), des butées (16) et (16.1) qui servent de bords latéraux pour le guidage de la bande (3), lesdites butées (16) et (16.1) déterminant deux largeurs de guidage, par exemple pour des bandes (3) de l'ordre de 150 millimètres de largeur et pour des bandes (3) de 300 millimètres de largeur ; dans chacune de ces gammes, l'ajustement exact à la largeur concrète de la bande (3) utilisée s'effectue par réglage de la largeur au moyen de l'actionneur (15) dans chaque cas.

Selon une réalisation, les butées (16) qui donnent la gamme de guidage de plus grande largeur sont prévues fixes dans les parties extrêmes mobiles de la composition correspondante des guides (13) et (14) ; tandis que les butées (16.1) qui donnent la gamme de plus petite largeur sont prévues démontables, de sorte qu'il suffit de retirer ces butées (16.1) pour établir dans chaque cas la largeur de guidage correspondante pour la bande (3) qu'on va utiliser.

D'un autre côté, les guides précités (13) et (14) sont munis d'un actionneur respectif (17) au moyen duquel chacun d'eux peut être déplacé en bloc vers les côtés, en pouvant ainsi régler la position pour assurer un centrage parfait par rapport à l'alignement de l'application de la bande (3), afin d'éviter les erreurs que toute déviation de l'alignement occasionnerait.

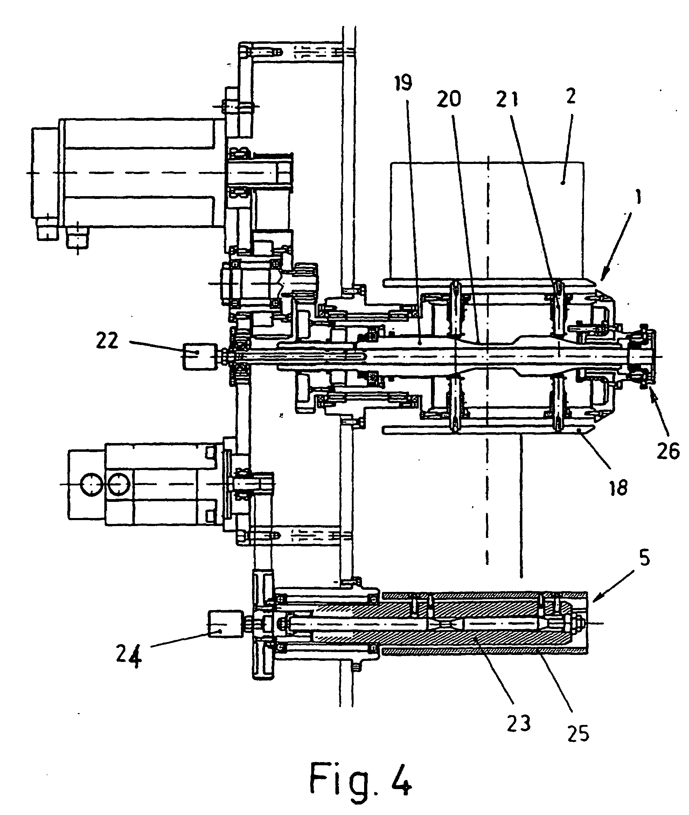

Le porte-bobines (1) sur lequel se monte la bobine (2) qui porte la bande (3) à appliquer comprend des coquilles (18) qui sont mobiles dans la direction radiale pour assurer la fixation de la bobine (2) au cours du montage, ou pour laisser cette fixation libre pour le démontage, ce mouvement radial des coquilles (18) se produisant par déplacement axial d'un axe central (19) muni de gorges coniques (20), avec lesquelles coopèrent des supports (21) des coquilles précitées (18), comme on l'observe sur la figure 4.

Ce déplacement de l'axe central (19) s'effectue au moyen d'un actionneur (22) qui, selon le sens de la rotation, actionne le déplacement dans un sens ou dans l'autre.

Le porte-bobines (5) récepteur de la bande support en papier (3.2) comprend à son tour un axe central (23) qui peut être déplacé au moyen d'un actionneur (24) et qui est muni de gorges coniques avec lesquelles coopèrent les supports de coquilles correspondantes (25) mobiles dans la direction radiale, au moyen desquelles s'effectue la fixation de la bobine correspondante (4) de réception de la bande de papier (3.2).

Le porte-bobines (1) comprend en outre un actionneur (26) au moyen duquel on peut déplacer tout le bloc dudit porte-bobines (1) dans la direction axiale, en permettant ainsi de réaliser le centrage parfait de la bande (3) par rapport à l'alignement adéquat. Ce réglage du positionnement centré de la bande (3) avec l'actionneur (26) du porte-bobines (1), de même que le réglage du centrage dans ce même sens, au moyen des actionneurs (17) des guides (13) et (14), peut être manuel, mais il peut aussi être réalisé par un actionnement de commande automatique au moyen d'une installation équipée des moyens appropriés pour cela.

Dans la zone dans laquelle la bande (3) circule depuis la bobine d'alimentation (2) vers la zone d'application, sont disposés des moyens de coupe avec lesquels s'effectue la coupe de la couche supérieure de composite (3.1) de la bande (3), selon ce qui a été prévu pour l'application. L'actionnement desdits moyens de coupe est entièrement automatique, son fonctionnement étant commandé à partir d'une boîte de contrôle (27) disposée sur le support (28) de la tête.

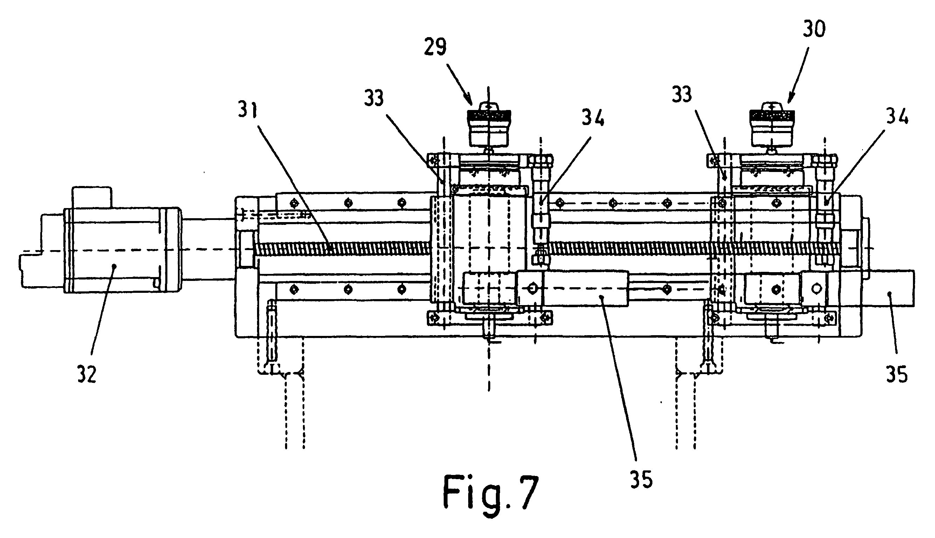

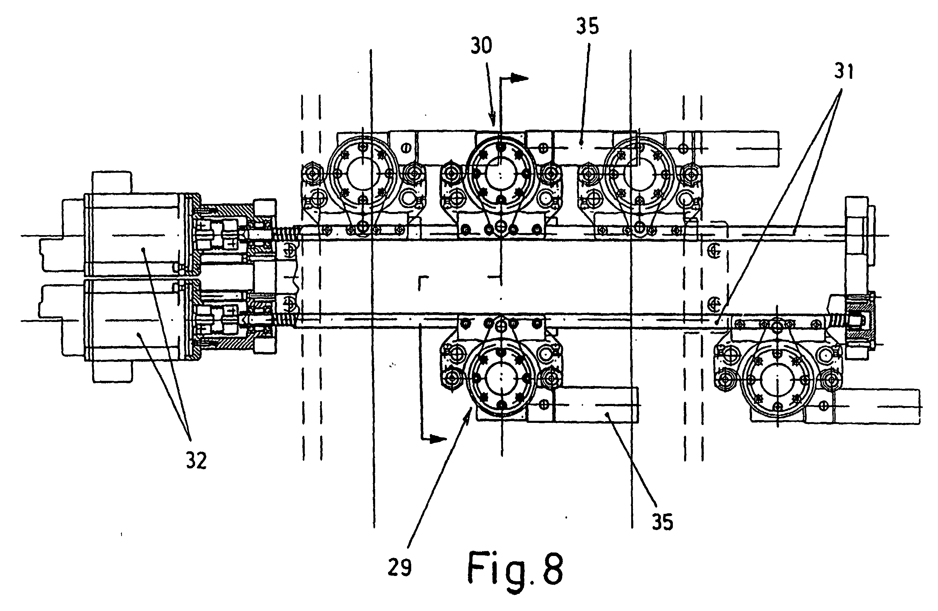

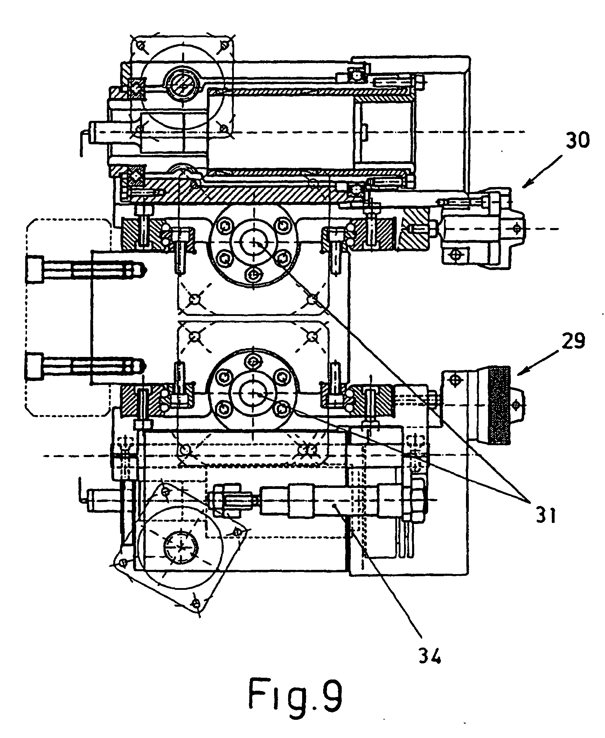

Ces moyens de coupe sont constitués par deux mécanismes porte-couteaux (29) et (30), lesquels sont disposés, selon les figures 7, 8 et 9, dans un montage comportant un déplacement longitudinal sur des vis (31) respectives, et un actionnement au moyen d'actionneurs correspondants (32), et peuvent à leur tour être déplacés en hauteur sur des guides (33) correspondants et avec actionnement au moyen de cylindres actionneurs respectifs (34). La rotation desdits mécanismes (29) et (30) pour les actionnements de coupe, est mis en action par des moteurs correspondants (35), lesquels actionnent le mouvement rotatif de l'axe porte-couteaux au moyen d'une transmission à pignon et crémaillère.

Avec cette disposition de mobilité et d'actionnement, les mécanismes précités (29) et (30) permettent de réaliser des coupes d'une précision absolue et dans une trajectoire quelconque, en sectionnant totalement la couche supérieure du composite (3.1) dans les coupes pour que les chutes à éliminer se détachent facilement et sans affecter significativement la bande support en papier (3.2) afin que cette dernière ne se casse pas et reste entière en aval de la zone d'application pour être recueillie sur la bobine (4).

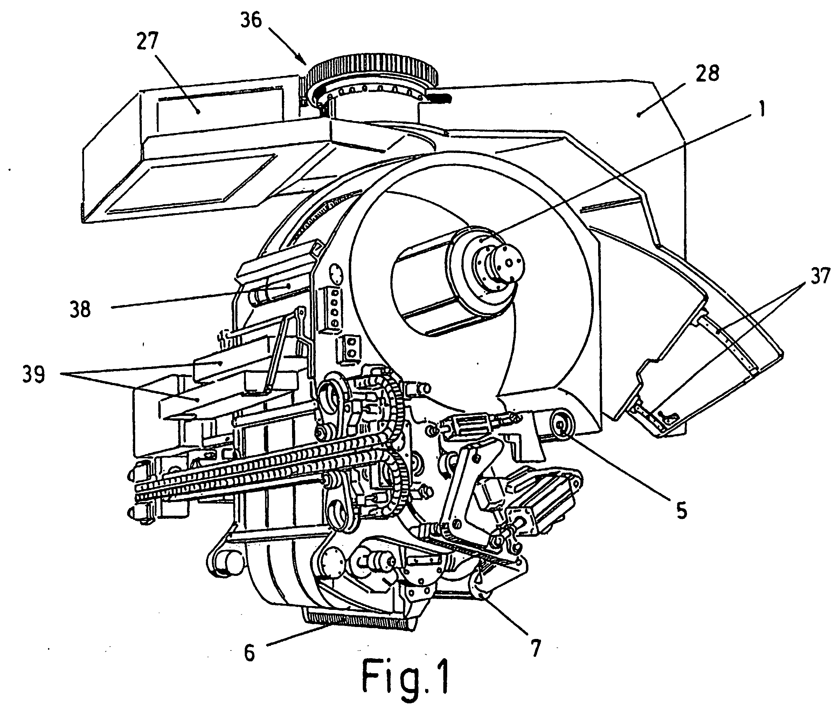

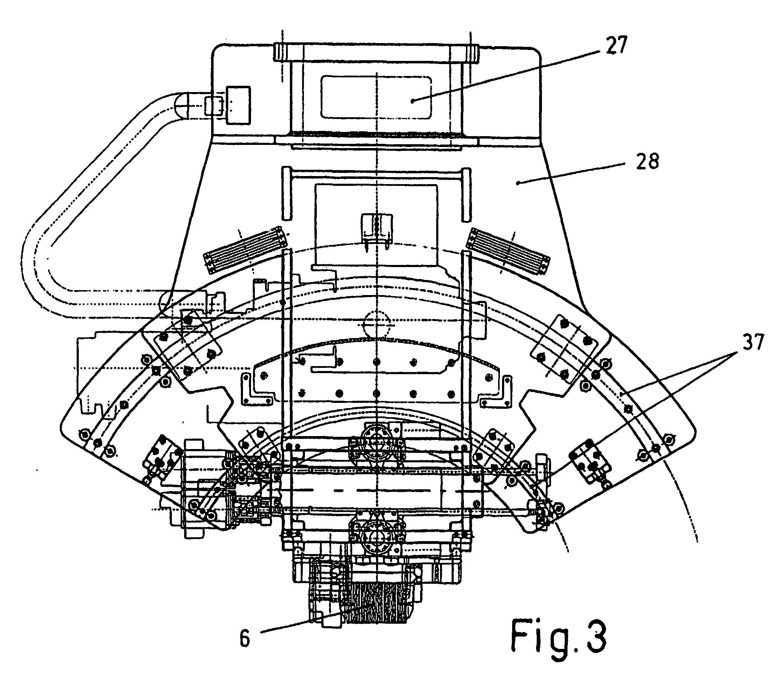

Pour le processus des travail de l'application des bandes de composite (3.1) sur les surfaces correspondantes, la tête est disposée avec montage rotatif du support (28) par rapport à un axe vertical, par actionnement au moyen d'une transmission (36), et en montage de basculement sur son propre support (28), par accouplement de la transmission sur une couronne respective (37), selon les figures 1, 2 et 3.

La transmission (36) de l'actionnement rotatif et l'accouplement de la transmission sur la couronne (37) prévue pour l'actionnement basculant s'effectuent au moyen d'un jeu de deux pignons d'attaque motrice, un des pignons mettant l'actionnement en action dans un sens et l'autre l'actionnement dans l'autre sens, de sorte qu'on obtient une totale précision de mouvements, sans jeu dans l'inversion des mouvements.

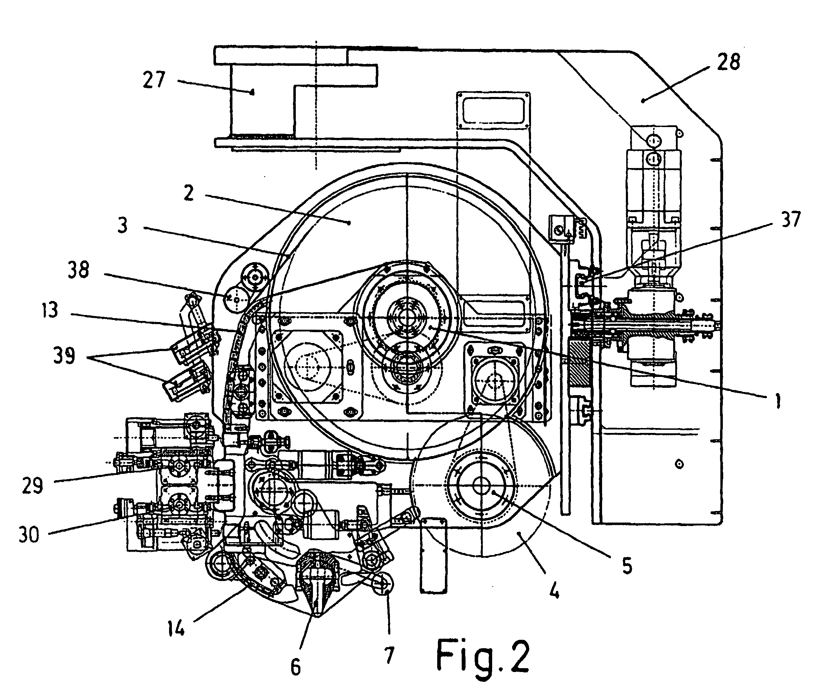

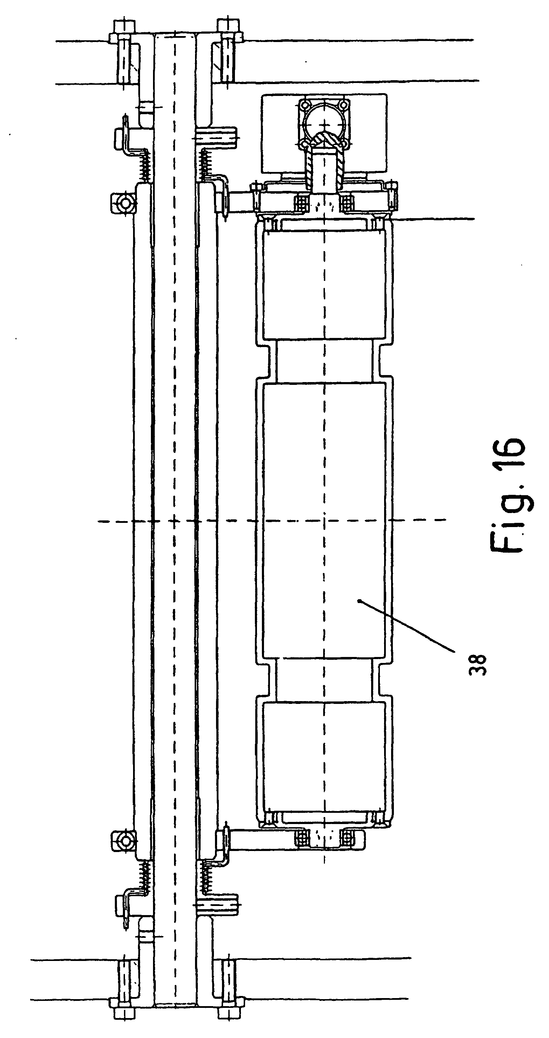

La vitesse de la bande (3) dans son déplacement depuis la bobine (2) d'alimentation jusqu'à la zone d'application est contrôlée par un rouleau encodeur (38) de transfert, visible sur les figures 1 et 2 et représenté sur la figure 16, lequel réalise, par l'intermédiaire des moyens adéquats, un contrôle de commande de l'actionnement moteur de l'acheminement de la bande (3), en réalisant les corrections nécessaires pour maintenir constante la vitesse de ladite bande (3) à son arrivée à la zone d'application, en compensant les variations de ladite vitesse que la réduction du diamètre et du volume de la bobine d'alimentation (2) tendent à provoquer par suite de la consommation, de sorte que le processus d'application sur les surfaces de travail est totalement uniforme.

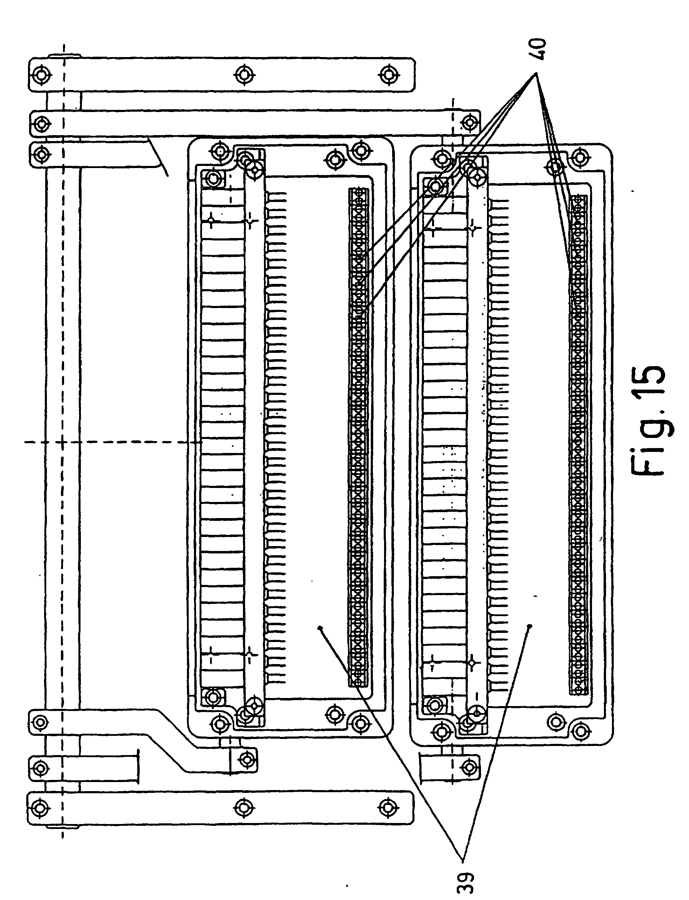

En supplément, il s'effectue aussi un contrôle sur la bande (3) au moyen de deux boîtes (39) munies de photodiodes détectrices (40) (figure 15), lesquelles sont disposée dans la zone de passage de ladite bande (3) vers la zone d'application, comme on l'observe sur les figures 1 et 2, de sorte que lesdites photodiodes (40) inspectent totalement la surface de la bande (3) et, lorsqu'elles détectent un défaut quelconque dans la couche supérieure de composite (3.1), provoquent l'arrêt du dispositif, en évitant ainsi qu'une zone défectueuse vienne à être appliquée sur la surface de travail.

## Revendications

1. Tête enrubanneuse pour l'application de bandes de composite du type formé d'un ensemble rotatif pouvant être basculé, comprenant des moyens de compactage destinés à presser une bande (3) composée d'une couche supérieure de composite (3.1) et d'une feuille support en papier (3.2) et qui est acheminée à partir d'une bobine d'alimentation (2), les moyens de compactage étant constitués par un fouloir (6) et par un élément de pression (7), lesquels peuvent tous deux être basculés entre des positions respectives de travail et de retrait, le fouloir (6) entrant en action en premier lieu pour fixer la couche supérieure de composite (3.1) de la bande (3) sur la surface d'application, tandis que l'élément de pression (7) agit ensuite, en pressant la couche de composite (3.1) avec force contre la surface correspondante pour effectuer le compactage, **caractérisée en ce que** :
le fouloir (6) et l'élément de pression (7) sont disposés pour pouvoir être actionnés indépendamment et successivement sur la zone d'application, le fouloir (6) étant monté sur un support basculant (8), lequel peut être actionné en basculement au moyen de cylindres d'actionnement (10), pour donner les positions de travail et de retrait dudit fouloir (6), et l'élément de pression (7) étant monté sur un support basculant (9), lequel peut être actionné en basculement au moyen de cylindres d'actionnement (11) pour donner les positions de travail et de retrait dudit élément de pression (7) tandis que d'autres cylindres (12) entrent en action pour presser ledit élément de pression avec force contre la surface d'application dans la position de travail.

2. Tête enrubanneuse pour l'application de bandes de composite selon la revendication 1, **caractérisée en ce que**, sur le trajet vers la zone d'alimentation, la bande (3) passe sur des guides conducteurs (13) et (14) munis d'une alimentation en air sous pression pour éviter le frottement, lesquels sont réglables en largeur au moyen d'actionneurs correspondants (15) pour l'ajustement à la largeur de la bande (3) utilisée, et sont de plus montés dans un montage mobile, de déplacement latéral, qui permet le positionnement au moyen d'actionneurs correspondants (17) pour le centrage par rapport à l'alignement l'application de la bande (3).

3. Tête enrubanneuse pour l'application de bandes de composite selon la revendication 1 ou 2, **caractérisée en ce que** la bobine (2) d'alimentation de la bande (3) est montée dans un porte-bobines (1) qui est disposé en un montage mobile dans la direction axiale, et qui peut être déplacé au moyen d'un actionneur (26) pour le positionnement de centrage par rapport à l'alignement d'application de la bande (3).

4. Tête enrubanneuse pour l'application de bandes de composite selon une quelconque des revendications précédentes, **caractérisée en ce qu'**en liaison avec le passage de la bande (3) vers la zone d'application, sont disposés des moyens de coupe formés de deux mécanismes porte-couteaux (29) et (30), lesquels peuvent être entraînés en déplacement longitudinal au moyen de vis (31), déplacés en hauteur par l'actionnement de cylindres (34) et actionnés en rotation sur l'axe porte-couteaux au moyen de moteurs correspondants (35).

5. Tête enrubanneuse pour l'application de bandes de composite selon une quelconque des revendications précédentes, **caractérisée en ce qu'**en liaison avec le passage de la bande (3) vers la zone d'application, est disposé un rouleau encodeur (38) de transfert, lequel réalise une commande de l'actionnement alimentateur de la bande (3) pour maintenir une vitesse constante d'arrivée de la bande (3) à la zone d'application.

6. Tête enrubanneuse pour l'application de bandes de composite selon une quelconque des revendications précédentes, **caractérisée en ce qu'**en liaison avec le passage de la bande (3) vers la zone d'application, sont disposés des boîtes (39) munies de photodiodes détectrices (40), lesquelles effectuent une inspection de la bande (3) pour arrêter le processus de l'application lorsqu'un défaut quelconque est détecté dans le composite (3.1) de ladite bande (3).

7. Tête enrubanneuse pour l'application de bandes de composite selon une quelconque des revendications précédentes, **caractérisée en ce que** la transmission de l'actionnement rotatif et basculant de l'ensemble de la tête s'effectue dans les deux cas avec un double pignon d'attaque qui met les actionnements en action dans un sens et dans l'autre au moyen de pignons différents respectifs, en annulant le jeu dans l'inversion du mouvement.

## Claims

1. Tape laying unit for depositing bands of composite, of the type formed by a rotating assembly which can be tilted, comprising compacting means intended to press a band (3) consisting of an upper layer of composite (3.1) and a paper backing sheet (3.2) and which derives from a feed spool (2), the compacting means consisting of a press (6) and a pressure part (7) which can both be tilted between two respective working and withdrawal positions, the press (6) coming into action first to fix the upper composite layer (3.1.) of the band (3) onto the application surface, while the pressure part (7) comes into subsequent action pressing the composite layer (3.1) with force against the corresponding surface to conduct compacting, **characterized in that**:
the press (6) and pressure part (7) are arranged so that they can be actuated independently and successively on the application zone, the press (6) being mounted on a tilting support (8) which can be caused to tilt by means of actuator cylinders (10) to provide the working and withdrawal positions of said press (6), and the pressure part (7) being mounted on a tilting support (9) which can be caused to tilt by means of actuator cylinders (11) to provide working and withdrawal positions of said pressure part (7), while other cylinders (12) come into action to forcefully press said pressure part against the application surface in the working position.

2. Tape laying unit for the application of bands of composite as in claim 1, **characterized in that**, when travelling towards the feed zone, the band (3) passes over conductor guides (13) and (14) provided with a pressurized air supply to avoid friction, whose width can be adjusted by means of corresponding actuators (15) to adjust to the width of band (3) used, and are also mounted on a mobile assembly having lateral movement which enables positioning by means of corresponding actuators (17) for centring relative to the alignment of application of the band (3).

3. Tape laying unit for the application of bands of composite as in claim 1 or 2, **characterized in that** the feed spool (2) of the band (3) is mounted in a spool holder (1) arranged in a mounting movable in the axial direction and which can be moved by means of an actuator (26) for centre positioning relative to the alignment of application of the band (3).

4. Tape laying unit for the application of bands of composite as in any of the preceding claims, **characterized in that** in connection with the passing of the band (3) towards the application zone, cutting means are arranged formed of two blade-holder mechanisms (29) and (30) which can be driven in longitudinal movement by means of screws (31), moved upwards through actuation of cylinders (34) and actuated in rotation around the blade-holder axis by means of corresponding motors (35).

5. Tape laying unit for the application of bands of composite as in any of the preceding claims, **characterized in that** in connection with the passing of the band (3) towards the application zone, a coding transfer roller (38) is arranged which gives feed actuation command of the band (3) to maintain a constant arrival speed of the band (3) in the application zone.

6. Tape laying unit for the application of bands of composite as in any of the preceding claims, **characterized in that** in connection with the passing of the band (3) towards the application zone, boxes (39) fitted with detector photodiodes (40) are arranged which perform inspection of the band (3) to halt the application process when any defect is detected in the composite (3.1.) of said band (3).

7. Tape laying unit for the application of bands of composite as in any of the preceding claims, **characterized in that** transmission of rotating and tilting actuation of the tape laying unit assembly is performed in both cases by a double drive gearwheel which sets actuation in action in one direction and in the other by means of different respective gearwheels, cancelling out slack when movement is reversed.

## Patentansprüche

1. Bandlegeeinheit zum Auftragen eines Bandes aus Verbundmaterial des Typs, der aus einer Rotationseinheit gebildet ist, die gekippt werden kann, die Mittel zum Kompaktieren umfasst, die dazu bestimmt sind, ein Band (3) bestehend aus einer oberen Verbundschicht (3.1) und einem Trägerblatt Papier (3.2) zu pressen, und das ausgehend von einer Zuführspule (2) befördert wird, wobei die Mittel zum Kompaktieren aus einem Stößel (6) und aus einem Druckelement (7) bestehen, welche beide zwischen den jeweiligen Arbeits- und Rückzugstellungen gekippt werden können, wobei der Stößel (6) zuerst in Aktion tritt, um die obere Verbundschicht (3.1) des Bandes (3) auf die Auftragungsfläche zu drücken, während das Druckelement (7) anschließend wirkt, indem es die Verbundschicht (3.1) mit Kraft gegen die entsprechende Fläche drückt, um das Kompaktieren durchzuführen, **dadurch gekennzeichnet, dass**:
der Stößel (6) und das Druckelement (7) angeordnet sind, um unabhängig und nacheinander auf der Auftragungszone betätigt werden zu können, wobei der Stößel (6) auf einen Kippträger (8) montiert ist, der mittels Betätigungszylindern (10) kippend betätigt werden kann, um die Arbeits- und Rückzugstellungen des Stößels (6) zu verleihen, und wobei das Druckelement (7) auf einen Kippträger (9) montiert ist, der mittels Betätigungszylindern (11) kippend betätigt werden kann, um die Arbeits- und Rückzugstellungen des Druckelements (7) zu verleihen, während andere Zylinder (12) in Aktion treten, um das Druckelement in der Arbeitsstellung mit Kraft gegen die Auftragungsfläche zu drücken.

2. Bandlegeeinheit zum Auftragen eines Bandes aus Verbundmaterial gemäß Anspruch 1, **dadurch gekennzeichnet, dass** auf der Bahn zur Zuführzone das Band (3) auf Leitführungen (13) und (14) verläuft, die mit einer Luftzufuhr unter Druck versehen sind, um die Reibung zu vermeiden, die in Breite mittels entsprechender Stellglieder (15) zum Einstellen der Breite des verwendeten Bandes (3) einstellbar und ferner in einem beweglichen Aufbau in seitlicher Verschiebung installiert sind, der das Positionieren mittels entsprechender Stellglieder (17) für das Zentrieren in Bezug auf die Auftragungsausrichtung des Bandes (3) erlaubt.

3. Bandlegeeinheit zum Auftragen eines Bandes aus Verbundmaterial gemäß Anspruch 1 oder 2, **dadurch gekennzeichnet, dass** die Zuführspule (2) des Bandes (3) in einem Spulenhalter (1) installiert ist, der in einem in axiale Richtung beweglichen Aufbau angeordnet ist und mittels eines Stellglieds (26) für die Zentrierpositionierung in Bezug auf die Auftragungsausrichtung des Bandes (3) verstellt werden kann.

4. Bandlegeeinheit zum Auftragen eines Bandes aus Verbundmaterial nach einem der vorhergehenden Ansprüche, **dadurch gekennzeichnet, dass** in Verbindung mit dem Verlauf des Bandes (3) zur Auftragungszone Schneidmittel gebildet aus zwei Klingenträgermechanismen (29) und (30) angeordnet sind, die in Längsverschiebung mittels Schrauben (31) angetrieben werden können, die in Höhe durch das Betätigen von Zylindern (34) verstellt und in Drehung auf der Klingenträgerachse mittels entsprechender Motoren (35) betätigt werden können.

5. Bandlegeeinheit zum Auftragen eines Bandes aus Verbundmaterial gemäß einem der vorhergehenden Ansprüche, **dadurch gekennzeichnet, dass** in Verbindung mit dem Verlauf des Bandes (3) zur Auftragungszone eine Transfercodierwalze (38) angeordnet ist, die eine zuführende Betätigungssteuerung des Bandes (3) durchführt, um eine konstante Ankunftsgeschwindigkeit des Bandes (3) in der Auftragungszone aufrechtzuerhalten.

6. Bandlegeeinheit zum Auftragen eines Bandes aus Verbundmaterial gemäß einem der vorhergehenden Ansprüche, **dadurch gekennzeichnet, dass** in Verbindung mit dem Verlauf des Bandes (3) zur Auftragungszone Gehäuse (39) versehen mit erfassenden Fotodioden (40) angeordnet sind, die eine Inspektion des Bandes (3) durchführen, um den Auftragungsprozess zu stoppen, wenn irgendein Fehler im Verbund (3.1) des Bandes (3) erfasst wird.

7. Bandlegeeinheit zum Auftragen eines Bandes aus Verbundmaterial gemäß einem der vorhergehenden Ansprüche, **dadurch gekennzeichnet, dass** die Übertragung der Rotations- und Kippbetätigung der ganzen Bandlegeeinheit in den zwei Fällen mit einem Doppelantriebsritzel erfolgt, das die Betätigungen in eine Richtung und in die andere mittels verschiedener Ritzel in Aktion versetzt, indem das Spiel in der Bewegungsumkehrung aufgehoben wird.
